# EUROPEAN PATENT SPECIFICATION

(11) **EP 2 300 989 B1**
(45) Date of publication and mention of the grant of the patent: **09.01.2019**
(21) Application number: 09766869.3
(22) Date of filing: 16.06.2009
(51) Int. Cl.: G06T 3/40, G06T 7/60, G09B 21/00

(54) **METHOD AND APPARATUS FOR AUTOMATICALLY MAGNIFYING A TEXT BASED IMAGE OF AN OBJECT**
VERFAHREN UND VORRICHTUNG ZUR AUTOMATISCHEN VERGRÖSSERUNG EINES TEXTBASIERTEN OBJEKTBILDES
PROCÉDÉ ET APPAREIL DESTINÉ À AGRANDIR AUTOMATIQUEMENT UNE IMAGE À BASE DE TEXTE D'UN OBJET

(30) Priority: 16.06.2008 WO PCT/NL2008/050386
(43) Date of publication of application: 30.03.2011
(73) Proprietor: Optelec Development B.V., 2993 LT Barendrecht (NL)
(72) Inventor: VAN SCHAIK, Michiel Jeroen, NL-4837 CD Breda (NL)
(74) Representative: V.O.
(86) International application number: PCT/NL2009/050351
(87) International publication number: WO 2009/154451

(56) References cited:
- EP-A- 0 838 751
- JP-A- 7 049 865
- US-A- 4 928 170
- US-A1- 2003 128 184
- US-A1- 2004 119 714
- US-A1- 2004 123 243
- US-B1- 6 256 650
- US-B1- 6 731 326

## Description

The invention relates to a method according to the preamble of claim 1 and to an apparatus according to the preamble of claim 14. In particular the invention relates to a method and apparatus useful in assisting persons with impaired eyesight, low vision or other reading difficulties impairing reading and writing.

It has been found useful in such method and apparatus to employ a user adjusted rate of magnification; because type faces in a text based source may vary substantially in font size. The impaired reader may often have a personal viewing requirement limited to a particular size range of type faces. In the known method and apparatus, as disclosed in US 6731326, adjustable magnification is obtained by changing the distance between a camera and an object and thereby altering the angle of view. This known arrangement requires the impaired reader to operate a manual control, whenever a font size in the text based source changes. Such is often the case with the difference between headlines and columns in newspapers.

Especially for visually impaired, often elderly, persons it would be desirable to reduce as many manual controls, and the need of using these, as much as possible on reading and writing magnifiers.

The only known method for automatic font display magnification in the prior art is to take a photo of the text, scan the text and recognize it and deliver the text in a displayed format as a column of words, a row of words, or a word at a time and in speech. This method of processing has the disadvantage of being complex in use, expensive and time consuming, and its output is a result of a processed image.

By contrast the object of the current invention is a simple, inexpensive, and instantly operating method and apparatus. An additional aim is to eliminate virtually all interface buttons on devices for carrying out the method of magnifying text based images.

Accordingly it is an object of the present invention to overcome or ameliorate at least one of the disadvantages of the prior art. It is also an object of the present invention to provide alternative structures which are less cumbersome in operation and which moreover can be made relatively inexpensively. Alternatively it is an object of the invention to at least provide the public with a useful choice.

To this end the invention provides for a method and apparatus as defined in the appended claims. With the invention all settings need to be personalized only once. So independent on what font size is under the camera, it will be automatically magnified to the desired font size to be displayed on the display screen. Once the user's preference has been established, varying sizes of type faces that are scanned do not require adjustment of the magnification rate. The apparatus according to the invention will thus always have the same setting when switched on and the required magnification rate is adjusted automatically by the device. Even a manual ON/OFF switch may be eliminated, by using an automatic proximity switch. Apart from the displayed font size, other functions like: contrast, brightness, or color enhancements can also be predefined to a user's requirements. The present invention thus directly and instantly auto-magnifies the subjected image or text as is in the pre-set font or letter size on the display.

According to another aspect of the invention it would also be advantageous for impaired readers to be provided with an option to convert type faces to a particular model of type face or font that is easier to distinguish than the type face model or font of the text based source. Further advantageous embodiments are defined in dependent sub claims included with the appended claims, as well as in the detailed description of preferred embodiments. US 2003/0238184 relates to a tool for projecting computer related presentations in electronic form onto a screen for viewing by an audience. By predicting readability, given an expected viewing distance and projection screen size, the tool recommends a suitable font size. It is not disclosed in US 2003/0238184 to generate a focused image of at least part of an object containing fonts of a variable size. It is also not disclosed to display the fonts with a predetermined second font size. US 4, 928, 170 relates to a document enlarger with automatic focus control. Image magnification is by an adjustable lens. It is not disclosed to display fonts with a predetermined second font size. US 6, 256, 650 discloses a method for automatically causing editable text to substantially occupy a text frame. A suitable font size is selected. It is not disclosed to display fonts with a predetermined second font size. US 2004/119714 and US 2004/ 123243 relate to computer readability of characters. It is not disclosed to display fonts with a predetermined second font size. Such preferred embodiments are described in reference to the accompanying drawings in which:
Figure 1 is a schematic representation of an apparatus according to the invention being used with a first text based source image on an object;
Figure 2 is a schematic representation of an apparatus according to the invention being used with a second text based source image on an object;
Figure 3 is a schematic representation of a first size for display setting; and
Figure 4 is a schematic representation of a second size for display setting.

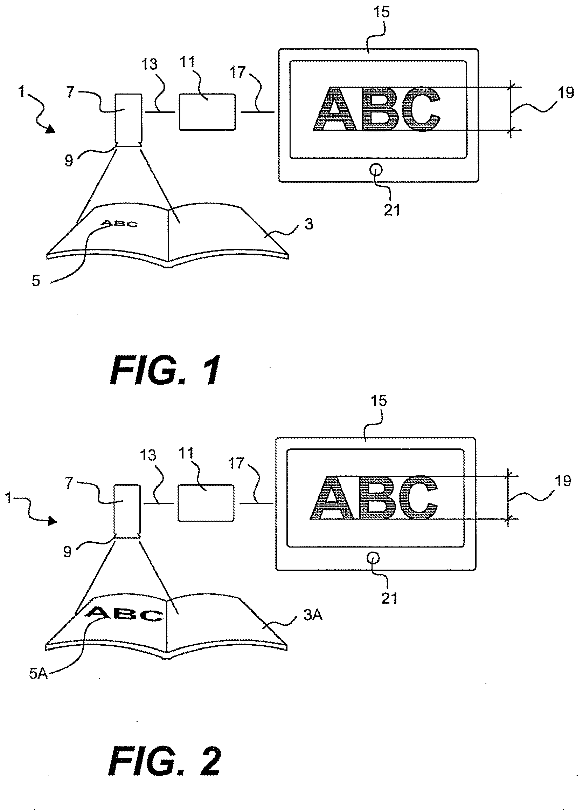

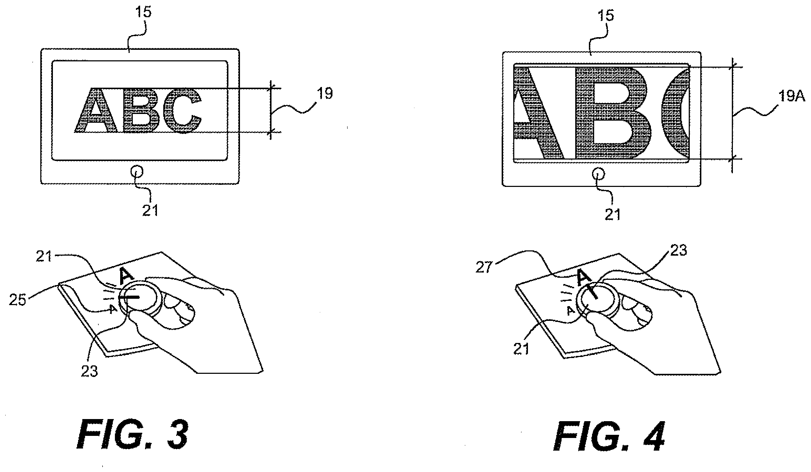

In Figure 1 an apparatus 1 is seen being used to capture an image from a text based source on an object, such as a book 3. A text 5 on the book 3 has characters represented as "ABC" of a first relatively small font size. An image capturing device, such as camera 7 is capturing an image from the page in the book 3 on which the text 5 is printed. The camera 7 is provided with an optical lens 9, which may have an automatic focus control as is known to the skilled person. The camera 7 is also connected to a processor 11, by means of a suitable wired or wireless first data transmission connection 13. The processor 11 is also connected to a display device 15 by means of a wired or wireless second data transmission connection 17. Figure 2 shows the same apparatus 1 of Figure 1, but being used with a different text based source image on a book 3A. The book 3A has a text 5A in the form of characters represented as "ABC" of a second relatively large font size. In all other respects the elements shown in Figure 2 are identical to those shown in Figure 1 and hence carry the same reference numerals. Comparing Figure 2 with Figure 1, it is seen that the character from the source image 5, respectively 5A, are displayed on the display device 15 in a font size with an identical height 19. This height can be preset by adjustment of a manual control knob 21, as will be further explained in reference to Figures 3 and 4.

Figure 3 illustrates one size for display setting resulting in a displayed font size having a character height 19. It is seen that the manual control knob 21 is rotated anti-clockwise to have its pointer 23 aligned with a first size for display indication 25 on an arcuate scale. In Figure 4 the manual control knob 21 is rotated clockwise to have the pointer 23 aligned with a second size for display indication 27 along the arcuate scale. This adjustment results in a display of the characters on the display device 15 with a larger character height 19A.

In use, the object with the text based source image 3 is provided on an object support surface (not shown but conventional). Positioned above the object 3 is the camera 7 for capturing a view of the text 5. The camera 7, through lens 9 generates a focused image of at least part of the object 3 and transmits this image to the processor 11 for magnification of the image captured by the camera 7 to a size specified for display on the display device 15. Alternatively, the camera 7 may be replaced by another image capture device, such as a scanner or the like. In the processor 11 the magnification is effected to a rate that is controlled by the second predefined size for display 19, 19A of the font to appear on the display 15 and independent of the first font size.

The method further can include analyzing a continuous video or photographic still source image obtained from camera 7 as to the first font size and determining the magnification rate for the image to be displayed as an enhanced video or photographic still display image on the display device 15. The processor may determine or measure a vertical size of characters in the source text and adjust magnification based on a desired size of representation on the display device 15.

Further the method may include digitalization of the video or photographic still source image. Using digitalization also enables optical character recognition. The recognized information from the text image 5, 5A can then be used in a recreation of text from the source image, using a different font type, different line spacing or different character spacing to enhance readability further.

In many cases it is also desirable for impaired readers to have the option to convert type faces to a particular model of type face or font that is easier to distinguish than the type face model or font of the text based source. The magnification rate for the second font size may further be arranged to be automatically variable between 3 times the first font size and 30 times the first font size. The second font size is preferably pre-selectable to character height 19, 19A having a value between 10 mm and 150 mm. Preselecting display parameters relating to contrast, brightness, resolution and/or color may be used as an additional feature to enhance reading for the visional impaired user. The text based source image 5, 5A containing fonts may also be enhanced for display by increasing brightness of the text in relation to its background, or by increasing darkness of the text in relation to the background.

Other enhancements may include negative image and/or false colors. Automatic translation from one recognized language into a predefined other language can also be included as an action performed by the processor 11. Color information in the source image may be manipulated to create a display image with either a reduced gray gradation or a reduced color gradation. Correction for color blindness can be offered by shifting colors in the source image to different colors in the display image.

The display 15 of the apparatus 1 may be a table top display, but alternatively it can also take the form of a spectacle mounted display (not shown but conventional). In all its variations the display is advantageously a liquid crystal display and preferably is a high resolution graphics array display. It can also be advantageous when the display device 15 is a wide screen version. Further the position and/or angle of the display, in at least some applications, is preferably adjustable for view.

Means for varying the magnification rate may be included in the processor 11, which may also include a microprocessor operating an automatic font size logarithm.

Automatic focus control is preferably included to focus the lens 9 of camera 7. Illumination means, such as a light source, may advantageously be employed to illuminate the source image 5, 5A. Such illumination means is not shown in the drawings, but is generally conventional and known to the skilled person. It is further possible to additionally equip the apparatus 1, i.e. the processor 11, with a microphone. The processer, when suitably provided with means for speech recognition, will then be capable of creating a text source for display on the display device 15 in the predefined second font size 19, 19A.

It is further useful for the apparatus according to the invention to include means for recognizing colored or gray-scale pictures or illustrations. Such means can be provided by the text recognition means, which when unable to recognize text will automatically initiate a maximum zoom-out and cause the high contrast mode for text recognition to shift to a suitable photo-mode. It is also possible to arrange the text magnifying apparatus to change to negative display mode when light colored characters on a dark background are recognized. With the same feature it is also possible to provide a user, if so desired, with white characters on a black background, irrespective of the source text being negative or positive.

## Claims

1. Method of automatically, directly and instantly magnifying a text based source image (5, 5A) on an object (3) containing fonts of a variable, undetermined, first size for display, the method including:
providing the object (3) with the text based source image (5, 5A);
positioning an image capture device (1) in relation to the object to capture a view thereof;
generating a focused image of at least part of the object (3) with the image capture device (1) ; and
transmitting the image to a display (15), **characterized in that** the method includes of automatically, directly and instantly magnifying the text based source image (5, 5A) on the object (3) containing the fonts of the variable, undetermined, first size to a second predefined size (19, 19A) wherein the magnification is effected to a rate that is controlled by the second predefined size (19, 19A) for display of the font to appear on the display (15) and independent of the first font size.

2. Method of claim 1, further including analyzing a continuous video or photographic still source image as to the first font size and determining the magnification rate for the image to be displayed as an enhanced video or photographic still display image.

3. Method of claim 1 or 2, further including digitalization of the video or photographic still source image.

4. Method of claim 3, further including optical character recognition.

5. Method of claim 4, also including recreation of text (5, 5A) from the source image, using at least one of a different font type, different line spacing and different character spacing.

6. Method of any preceding claim, wherein the magnification rate for the second font size (19, 19A) is automatically variable between 3 times the first font size and 30 times the first font size.

7. Method of any preceding claim, wherein the second font size (19, 19A) is pre-selectable to a value between 10 mm and 150 mm height.

8. Method of any preceding claim, also including preselecting display parameters relating to at least one of contrast, brightness, resolution and color.

9. Method of claim 8, wherein the text based source image (5, 5A) containing fonts is enhanced for display by at least one of increasing brightness of the text in relation to background and darkness of the text in relation to background.

10. Method of claim 4 or 5, further including automatic translation from one recognized language into another predefined language.

11. Method of claim 8, wherein the color information in the source image (5, 5A) is manipulated to create a display image with any one of a reduced gray gradation and a reduced color gradation.

12. Method of claim 8, wherein correction for color blindness is offered by shifting colors in the source image to different colors in the display image.

13. Method of any preceding claim, wherein an inability to recognize a source image (5, 5A) to contain fonts or characters, automatically initiates a zoom-out of the image capture device and selection of a different contrast mode.

14. Apparatus (1) for automatically magnifying a text based source image (5, 5A) on an object (3) containing fonts of a variable first size to a second predefined size for display, including:
an object support surface;
an image capture device (7);
a support for positioning and supporting the image capture device in relation to the object support surface;
a display (15) for displaying the magnified image; and
a processor (11) for transmitting and for magnifying an image captured by the image capture device to the display, **characterized in that** the apparatus is for automatically magnifying the text based source image on the object containing the fonts of the variable first size to a second predefined size (19, 19A) for display ,wherein the processor (11) includes means for varying the magnification in rate, in response to the second predefined (19, 19A) size for display to appear on the display and independent of the first font size.

15. Apparatus of claim 14, wherein the display (15) is a table top display.

16. Apparatus of claim 14, wherein the display (15) is a spectacle mounted display.

17. Apparatus of claim 15 or 16, wherein the display (15) is a liquid crystal display.

18. Apparatus of any preceding claim 14-17, wherein the display (15) is a high resolution graphics array display.

19. Apparatus of claim 18, wherein the display (15) is a wide screen version.

20. Apparatus of any preceding claim 14-19, wherein the display (15) is adjustable for view.

21. Apparatus of any preceding claim 14-20, wherein the means for varying the magnification rate includes a microprocessor (11) operating an automatic font size algorithm.

22. Apparatus of any preceding claim 14-21, wherein the image capture device is a camera (7) and further including an automatic focus control to focus a lens (9) used on the camera.

23. Apparatus of any preceding claim 14-22, further including illumination means, preferably a light source, to illuminate the source image.

24. Apparatus of any preceding claim 14-23, further including a microphone connected to the processer (11) and means for speech recognition, capable of creating a text source for display in the predefined second font size.

25. Apparatus of any preceding claim 14-24, further including means to alter a zoom mode and a contrast mode of the image capture device in response to an inability to recognize text (5) in the source image.

## Patentansprüche

1. Verfahren zur automatischen, direkten und sofortigen Vergrößerung eines textbasierten Quellbildes (5, 5A) auf einem Objekt (3), umfassend Schriftarten einer variablen, unbestimmten ersten Größe zum Anzeigen, das Verfahren umfassend:
das Bereitstellen des Objekts (3) mit dem textbasierten Quellbild (5, 5A);
das Positionieren einer Bilderfassungsvorrichtung (1) in Bezug auf das Objekt, um eine Ansicht davon zu erfassen;
das Erzeugen eines fokussierten Bildes von mindestens einem Teil des Objekts (3) mit der Bilderfassungsvorrichtung (1); und
das Übertragen des Bildes an eine Anzeige (15), **dadurch gekennzeichnet, dass** das Verfahren das automatische, direkte und sofortige Vergrößern des textbasierten Quellbildes (5, 5A) auf das Objekt (3) umfasst, umfassend die Schriftarten der variablen, unbestimmten ersten Größe auf eine zweite vorbestimmte Größe (19, 19A), wobei die Vergrößerung mit einer Rate ausgeführt wird, die gesteuert wird von der zweiten vordefinierten Größe (19, 19A) zum Anzeigen der Schriftart, um auf der Anzeige (15) zu erscheinen und unabhängig von der ersten Schriftgröße.

2. Verfahren nach Anspruch 1, ferner umfassend das Analysieren eines ununterbrochenen Videos oder eines fotografischen Quellstandbildes hinsichtlich der ersten Schriftgröße und Bestimmen der Vergrößerungsrate für das anzuzeigende Bild als ein verbessertes Video oder fotografisches Anzeigestandbild.

3. Verfahren nach Anspruch 1 oder 2, ferner umfassend das Digitalisieren des Videos oder des fotografischen Quellstandbildes.

4. Verfahren nach Anspruch 3, ferner umfassend optische Zeichenerkennung.

5. Verfahren nach Anspruch 4, ebenfalls umfassend die Wiederherstellung von Text (5, 5A) anhand des Quellbildes unter Verwendung von mindesten einem von einer verschiedenen Schriftart, einem verschiedenen Zeilenabstand und einem verschiedenen Zeichenabstand.

6. Verfahren nach einem der vorhergehenden Ansprüche, wobei die Vergrößerungsrate für die zweite Schriftgröße (19, 19A) automatisch variabel ist zwischen dem 3-Fachen der ersten Schriftgröße und dem 30-Fachen der ersten Schriftgröße.

7. Verfahren nach einem der vorhergehenden Ansprüche, wobei die zweite Schriftgröße (19, 19A) vorwählbar ist auf einen Wert zwischen 10 mm und 150 mm Höhe.

8. Verfahren nach einem der vorhergehenden Ansprüche, ebenfalls umfassend das Vorwählen von Anzeigeparametern, bezogen auf mindestens eines von Kontrast, Helligkeit, Auflösung und Farbe.

9. Verfahren nach Anspruch 8, wobei das textbasierte Quellbild (5, 5A), umfassend Schriftarten, für die Anzeige verbessert wird durch mindestens eines, der Erhöhung der Helligkeit des Textes in Bezug auf Hintergrund und der Dunkelheit des Textes in Bezug auf Hintergrund.

10. Verfahren nach Anspruch 4 oder 5, ferner umfassend automatische Übersetzung einer erkannten Sprache in eine andere vordefinierte Sprache.

11. Verfahren nach Anspruch 8, wobei die Farbinformation in dem Quellbild (5, 5A) manipuliert wird, um ein Anzeigebild mit einer beliebigen einer reduzierten Graustufe und einer reduzierten Farbstufe zu schaffen.

12. Verfahren nach Anspruch 8, wobei Korrektur für Farbblindheit durch Verschieben von Farben in dem Quellbild zu verschiedenen Farben in dem Anzeigebild angeboten wird.

13. Verfahren nach einem der vorhergehenden Ansprüche, wobei eine Unfähigkeit zu erkennen, dass ein Quellbild (5, 5A) Schriften oder Zeichen enthält, automatisch ein Herauszoomen der Bilderfassungsvorrichtung und Auswählen eines anderen Kontrastmodus auslöst.

14. Vorrichtung (1) zur automatischen Vergrößerung eines textbasierten Quellbildes (5, 5A) auf einem Objekt (3), umfassend Schriften einer variablen ersten Größe zu einer zweiten vordefinierten Größe zur Anzeige, umfassend:
eine Objektträgeroberfläche;
eine Bilderfassungsvorrichtung (7);
einen Träger zum Positionieren und Trägern der Bilderfassungsvorrichtung in Bezug auf die Objektträgeroberfläche;
eine Anzeige (15) zum Anzeigen des vergrößerten Bildes; und
einen Prozessor (11) zum Übertragen und zur Vergrößerung eines Bildes, erfasst von der Bilderfassungsvorrichtung, zu der Anzeige, **dadurch gekennzeichnet, dass** die Vorrichtung zur automatischen Vergrößerung des textbasierten Quellbildes auf dem Objekt, umfassend die Schriften der variablen ersten Größe, zu einer zweiten vordefinierten Größe (19, 19A) zur Anzeige dient, wobei der Prozessor (11) Mittel umfasst zum Variieren der Vergrößerung in Rate als Reaktion auf die zweite vordefinierte (19, 19A) Größe zum Anzeigen, um auf der Anzeige zu erscheinen und unabhängig von der ersten Schriftgröße.

15. Vorrichtung nach Anspruch 14, wobei die Anzeige (15) eine Tabletop-Anzeige ist.

16. Vorrichtung nach Anspruch 14, wobei die Anzeige (15) eine brillenmontierte Anzeige ist.

17. Vorrichtung nach Anspruch 15 oder 16, wobei die Anzeige (15) eine Flüssigkristallanzeige ist.

18. Vorrichtung nach einem der vorhergehenden Ansprüche 14-17, wobei die Anzeige (15) eine hochauflösende Grafikarrayanzeige ist.

19. Vorrichtung nach Anspruch 18, wobei die Anzeige (15) eine Breitschirmversion ist.

20. Vorrichtung nach einem der vorhergehenden Ansprüche 14-19, wobei die Anzeige (15) einstellbar zur Ansicht ist.

21. Vorrichtung nach einem der Ansprüche 14-20, wobei das Mittel zum Variieren der Vergrößerungsrate einen Mikroprozessor (11) umfasst, der einen automatischen Schriftgrößenalgorithmus betreibt.

22. Vorrichtung nach einem der vorhergehenden Ansprüche 14-21, wobei die Bilderfassungsvorrichtung eine Kamera (7) ist und ferner umfassend eine automatische Fokussteuerung zum Fokussieren einer auf der Kamera verwendeten Linse (9).

23. Vorrichtung nach einem der vorhergehenden Ansprüche 14-22, ferner umfassend Beleuchtungsmittel, bevorzugt eine Lichtquelle, zum Beleuchten des Quellbildes.

24. Vorrichtung nach einem der vorhergehenden Ansprüche 14-23, ferner umfassend ein Mikrofon, verbunden mit dem Prozessor (11), und Mittel zur Spracherkennung, die fähig sind, eine Textquelle zur Anzeige in der vordefinierten zweiten Schriftgröße zu erzeugen.

25. Vorrichtung nach einem der vorhergehenden Ansprüche 14-24, ferner umfassend Mittel zum Andern eines Zoom-Modus und eines Kontrastmodus der Bilderfassungsvorrichtung als Reaktion auf eine Unfähigkeit, Text (5) in dem Quellbild zu erkennen.

## Revendications

1. Méthode d'agrandissement automatique, direct et instantané d'une image source à base de texte (5, 5A) sur un objet (3) contenant des polices de caractères d'une première taille variable, indéterminée, à afficher, la méthode comprenant de :
fournir à l'objet (3) l'image source à base de texte (5, 5A) ;
positionner un dispositif de capture d'image (1) par rapport à l'objet pour capturer une vue de celui-ci ;
générer une image focalisée d'au moins une partie de l'objet (3) à l'aide du dispositif de capture d'image (1) ; et
transmettre l'image à un affichage (15), **caractérisée en ce que** la méthode comprend l'agrandissement automatique, direct et instantané de l'image source à base de texte (5, 5A) sur l'objet (3) contenant les polices de caractères de la première taille variable, indéterminée, jusqu'à une seconde taille prédéfinie (19, 19A), l'agrandissement étant effectué à un taux qui est commandé par la seconde taille prédéfinie (19, 19A) pour que l'affichage de la police de caractères apparaisse sur l'affichage (15) et étant indépendant de la première taille de police de caractères.

2. Méthode selon la revendication 1, comprenant en outre l'analyse d'une image source vidéo continue ou figée photographique relative à la première taille de police de caractères et la détermination du taux d'agrandissement de l'image à afficher sous la forme d'une image d'affichage améliorée vidéo ou figée photographique.

3. Méthode selon la revendication 1 ou 2, incluant en outre une numérisation de l'image source vidéo ou figée photographique.

4. Méthode selon la revendication 3, incluant en outre une reconnaissance optique de caractères.

5. Méthode selon la revendication 4, comprenant également une reconstitution de texte (5, 5A) à partir de l'image source, en utilisant au moins l'un parmi un type différent de police de caractères, un interligne différent et un espacement différent de caractères.

6. Méthode selon l'une quelconque des revendications précédentes, dans laquelle le taux d'agrandissement pour la seconde taille de police de caractères (19, 19A) est automatiquement variable entre 3 fois la première taille de police de caractères et 30 fois la première taille de police de caractères.

7. Méthode selon l'une quelconque des revendications précédentes, dans laquelle la seconde taille de police de caractères (19, 19A) peut être présélectionnée à une valeur comprise entre 10 mm et 150 mm de hauteur.

8. Méthode selon l'une quelconque des revendications précédentes, comprenant également une présélection de paramètres d'affichage se rapportant au moins à un paramètre parmi un contraste, une luminosité, une résolution et une couleur.

9. Méthode selon la revendication 8, dans laquelle l'image source à base de texte (5, 5A) contenant des polices de caractères est améliorée pour un affichage par au moins l'une parmi une augmentation de luminosité du texte par rapport à l'arrière-plan et une augmentation de la noirceur du texte par rapport à l'arrière-plan.

10. Méthode selon la revendication 4 ou 5, incluant en outre une traduction automatique d'une langue reconnue dans une autre langue prédéfinie.

11. Méthode selon la revendication 8, dans laquelle les informations de couleur dans l'image source (5, 5A) sont manipulées pour créer une image d'affichage avec l'une quelconque parmi une gradation de gris réduite et une gradation de couleur réduite.

12. Méthode selon la revendication 8, dans laquelle une correction de daltonisme est proposée en décalant des couleurs de l'image source vers des couleurs différentes dans l'image d'affichage.

13. Méthode selon l'une quelconque des revendications précédentes, dans laquelle une incapacité à reconnaître une image source (5, 5A) pour contenir des polices de caractères ou des caractères, déclenche automatiquement un zoom arrière du dispositif de capture d'image et une sélection d'un mode de contraste différent.

14. Appareil (1) pour agrandir automatiquement une image source à base de texte (5, 5A) sur un objet (3) contenant des polices de caractères d'une première taille variable jusqu'à une seconde taille prédéfinie pour l'affichage, comprenant :
une surface de support d'objet ;
un dispositif de capture d'image (7) ;
un support pour positionner et supporter le dispositif de capture d'image par rapport à la surface de support d'objet ;
un affichage (15) pour afficher l'image agrandie ; et
un processeur (11) pour transmettre et agrandir une image capturée par le dispositif de capture d'image à l'affichage, **caractérisé en ce que** l'appareil est destiné à agrandir automatiquement l'image source à base de texte sur l'objet contenant les polices de caractères de la première taille variable jusqu'à une seconde taille prédéfinie (19, 19A) pour l'affichage, le processeur (11) comprenant des moyens pour faire varier le taux de d'agrandissement, en réponse à la seconde taille prédéfinie (19, 19A) pour que l'affichage apparaisse sur l'affichage et indépendamment de la première taille de police de caractères.

15. Appareil selon la revendication 14, dans lequel l'affichage (15) est un affichage sur table.

16. Appareil selon la revendication 14, dans lequel l'affichage (15) est un affichage monté sur lunettes.

17. Appareil selon la revendication 15 ou 16, dans lequel l'affichage (15) est un affichage à cristaux liquides.

18. Appareil selon l'une quelconque des revendications précédentes 14 à 17, dans lequel l'affichage (15) est un affichage à matrice graphique à haute résolution.

19. Appareil selon la revendication 18, dans lequel l'affichage (15) est une version à écran large.

20. Appareil selon l'une quelconque des revendications précédentes 14 à 19, dans lequel l'affichage (15) est ajustable pour la vue.

21. Appareil selon l'une quelconque des revendications précédentes 14 à 20, dans lequel les moyens pour faire varier le taux d'agrandissement comprennent un microprocesseur (11) exploitant un algorithme automatique de taille de police de caractères.

22. Appareil selon l'une quelconque des revendications précédentes 14 à 21, dans lequel le dispositif de capture d'image est un dispositif de prise de vue (7) et comprenant en outre une commande de mise au point automatique pour faire la mise au point d'un objectif (9) utilisé sur le dispositif de prise de vue.

23. Appareil selon l'une quelconque des revendications précédentes 14 à 22, comprenant en outre des moyens d'éclairage, de préférence une source de lumière, pour éclairer l'image source.

24. Appareil selon l'une quelconque des revendications précédentes 14 à 23, comprenant en outre un microphone connecté au processeur (11) et des moyens de reconnaissance vocale, capables de créer une source de texte à afficher dans la seconde taille de police de caractères prédéfinie.

25. Appareil selon l'une quelconque des revendications précédentes 14 à 24, comprenant en outre des moyens pour modifier un mode de zoom et un mode de contraste du dispositif de capture d'image en réponse à une incapacité à reconnaître un texte (5) dans l'image source.
